# EUROPEAN PATENT APPLICATION

(11) **EP 2 330 546 A1**
(43) Date of publication of application: **08.06.2011**
(21) Application number: 10014915.2
(22) Date of filing: 23.11.2010
(51) Int. Cl.: G06Q 30/00

(54) **Area information control system**

(30) Priority: 07.12.2009 JP 2009277539
(71) Applicant: Mitsubishi Electric Corporation, Tokyo 100-8310 (JP)
(72) Inventor: Minegishi, Norihiro, Tokyo 100-8310 (JP)
(74) Representative: Pfenning, Meinig & Partner GbR

(57) **Abstract**

An area information control system includes: a plurality of sensors each for sensing comings and goings of people in an area obtained by sectioning an aisle of a building by a sensing range of a corresponding sensor; a plurality of display devices located in each of areas, for respectively displaying predetermined contents; a people count analysis unit for calculating a number of people present in the each of the areas based on the comings and goings of people sensed by the plurality of sensors; and a display control unit for selecting a content to be displayed for each of the plurality of display devices based on the number of people present in the each of the areas, which is calculated by the people count analysis unit, and a rule for selecting the predetermined contents to be displayed.

## Description

### BACKGROUND OF THE INVENTION

### 1. Field of the Invention

The present invention relates to an area information control system that recognizes a distribution of people around a place where each of a plurality of display devices is installed, and dynamically controls a content to be displayed on the display device according to a state of the distribution, thereby enabling optimal information provision with an indefinite number of people targeted by a display device group as a whole.

### 2. Description of the Related Art

Conventionally, an information display system used in a place where an indefinite number of people gather displays contents suitable for attributes of customers who are right in front of a display device. For example, in JP 2008-225315 A, an electronic information medium is used to identify a customer's interest. A customer has an electronic information medium such as an IC card, on which information identifying the customer is stored, and, when the customer puts the electronic information medium over a reader, customer information is read, and information on customer's attribute and interest, which is stored on a server side, is retrieved. Based on results of the retrieval, advertisement information suitable for the customer's interest is retrieved, and then the advertisement information is displayed on a display device in front of the customer. Hence, it is possible to perform such advertisement delivery that focuses on particular targets.

Further, a technology disclosed in JP 2002-73321 A uses an image sensor to determine a customer's attribute and identify an individual without requiring the customer to perform a particular operation. A human figure is extracted from an image taken by the installed image sensor, and then characteristics thereof are extracted, including the height, the size of the face, the hair style, the color distribution of clothing, accessories, etc. Based on the extracted characteristics, attribute determinations are made regarding the sex, the age group, the occupation, and the customer group. Then, an advertisement that is regarded as suitable for the determined attributes, and thus, as the most appropriate, is displayed. In another case, identification of an individual is also performed for a person whose face image is registered in advance. In this case, too, an advertisement appropriate for the individual's attribute is displayed.

However, in the conventional information display system, based on a state of a customer who is right in front of a display device, information that is likely to attract interest from the customer is displayed, and hence, even if a plurality of display devices are provided in a large place where an indefinite number of people gather, the display devices do not display contents in coordination with one another. In addition, considering the fact that such an information display system targets only a customer who is right in front of the display device, there is a problem that a state around the installation place is not reflected onto the contents.

### SUMMARY OF THE INVENTION

In order to solve the above-mentioned problem, the present invention has been made, and therefore has an object to provide an area information control system that recognizes a distribution of people around a place where each of a plurality of display devices is installed, and dynamically controls a content to be displayed on the display device according to a state of the distribution, thereby enabling optimal information provision with an indefinite number of people targeted by a display device group as a whole.

According to the present invention, there is provided an area information control system including: a plurality of sensors each for sensing comings and goings of people in an area obtained by sectioning an aisle of a building by a sensing range of a corresponding sensor; a plurality of display devices located in each area, for respectively displaying predetermined contents; a people count analysis unit for calculating a number of people present in the each area based on the comings and goings of people sensed by the plurality of sensors; and a display control unit for selecting a content to be displayed for each of the plurality of display devices based on the number of people present in the each area, which is calculated by the people count analysis unit, and a rule for selecting the predetermined contents to be displayed.

According to the area information control system of the present invention, it is possible to recognize the distribution of people around the place where each of the plurality of display devices is installed, and dynamically control the content to be displayed on the display device according to the state of the distribution, thereby enabling the optimal information provision with an indefinite number of people targeted by the display device group as a whole.

### BRIEF DESCRIPTION OF THE DRAWINGS

In the accompanying drawings:
FIG. 1 is a block diagram illustrating a configuration of an area information control system according to a first embodiment of the present invention;
FIG. 2 is a diagram illustrating a layout of sensors and display devices of the area information control system according to the first embodiment of the present invention in a building;
FIG. 3 is a flow chart illustrating operation of a display control unit of the area information control system according to the first embodiment of the present invention;
FIGS. 4A and 4B are diagrams illustrating rules used by the display control unit of the area information control system according to the first embodiment of the present invention;
FIG. 5 is a flow chart illustrating operation of a display control unit of an area information control system according to a second embodiment of the present invention;
FIG. 6 is a flow chart illustrating operation of a display control unit of an area information control system according to a third embodiment of the present invention; and
FIG. 7 is a diagram illustrating a rule used by the display control unit of the area information control system according to the third embodiment of the present invention.

### DETAILED DESCRIPTION OF THE PREFERRED EMBODIMENTS

Hereinbelow, description is given of preferred embodiments of an area information control system according to the present invention with reference to the drawings.

### First embodiment

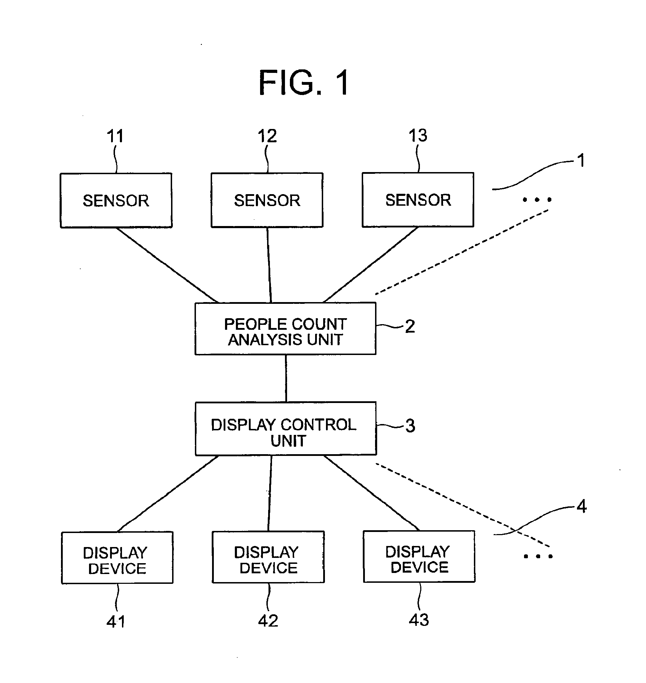

Description is given of an area information control system according to a first embodiment of the present invention with reference to FIGS. 1 to 4B. FIG. 1 is a block diagram illustrating a configuration of the area information control system according to the first embodiment of the present invention. It should be noted that, hereinbelow, the same reference numerals and symbols refer to the same or corresponding components in the drawings.

In FIG. 1, the area information control system according to the first embodiment of the present invention includes a sensor group 1, a people count analysis unit 2, a display control unit 3, and a display device group 4. The sensor group 1 includes a plurality of sensors 11, 12, 13, ... for sensing a human. The people count analysis unit 2 calculates, based on an output from each of the sensors 11, ..., the number of people present in an area that is sectioned based on a sensing range of the sensor and includes one or more display devices described later. The display control unit 3 selects, based on an output from the people count analysis unit 2, an appropriate content to be displayed on each of the display devices described later, and then issues an instruction to each of the display devices. The display device group 4 includes a plurality of display devices 41, 42, 43, ..., each of which displays a selected content according to an instruction issued by the display control unit 3.

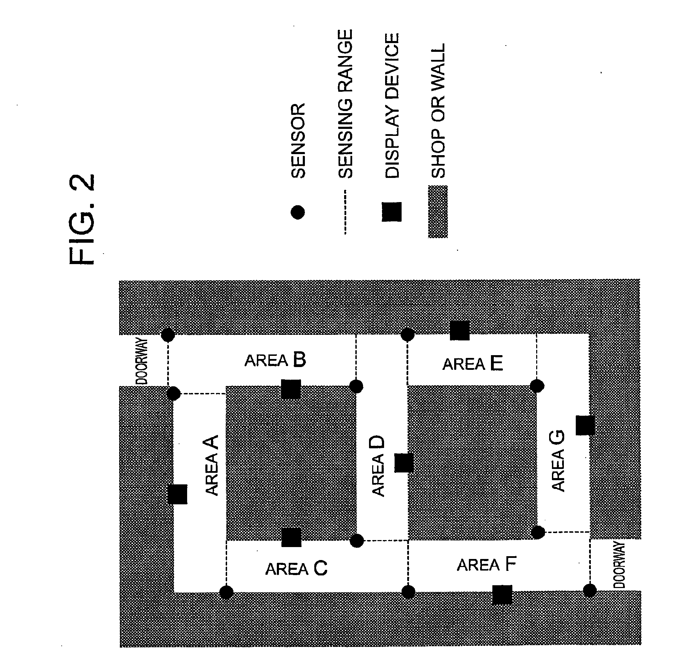

FIG. 2 is a diagram illustrating a layout of the sensors and the display devices of the area information control system according to the first embodiment of the present invention in a building.

As illustrated in FIG. 2, the sensor group 1 and the display device group 4 are located at places where people can pass in a given building. Hereinbelow,descriptionisherein given by taking, as an example of the building, a shopping center containing a large number of shops.

In FIG. 2, a shaded portion represents a shop, a wall, or the like, whereas a hollow portion represents an aisle along which people can pass. The display devices (black squares) 41, ... are located at arbitrary positions visible to people passing through aisles of the building. Each of the sensors (black circles) 11, ... is located so as to section, with its sensing range (dashed line), an aisle of the building. The sectioned part is referred to as "area". Areas A to G each include one or more display devices 41, .... In normal times, the display devices 41, ...display background video or contents regarding the shopping center in general.

Next, description is given of operation of the area information control system according to the first embodiment of the present invention with reference to the drawings.

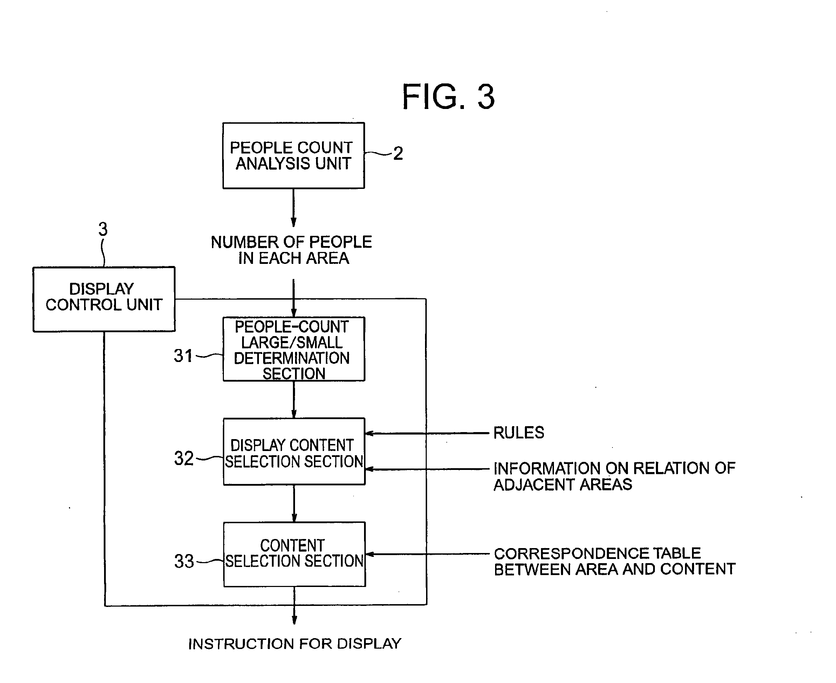

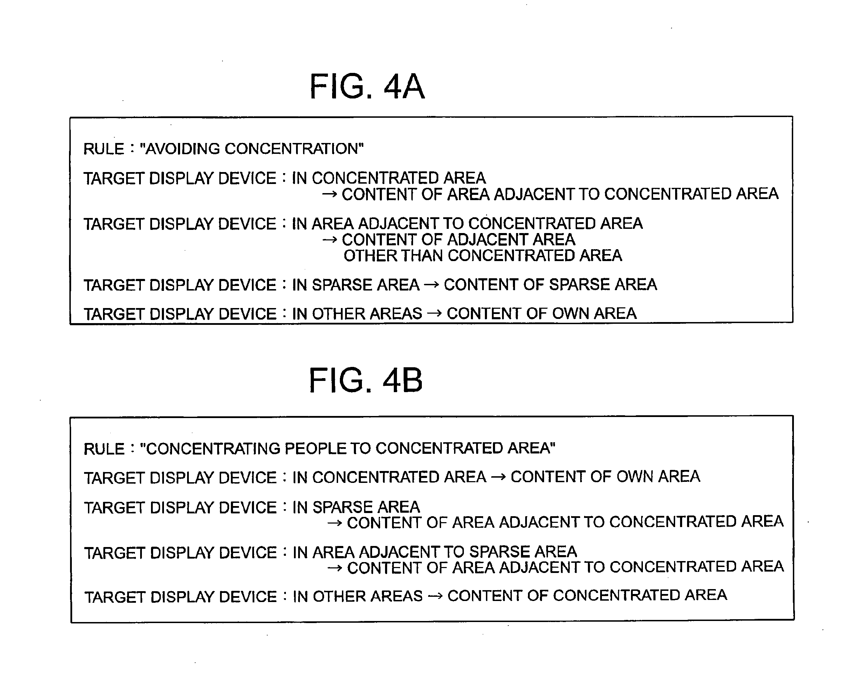

FIG. 3 is a flow chart illustrating operation of the display control unit of the area information control system according to the first embodiment of the present invention. Further, FIGS. 4A and 4B are diagrams each illustrating a rule used by the display control unit of the area information control system according to the first embodiment of the present invention.

Each of the sensors 11, ... of the sensor group 1 senses the number of people who have passed through its sensing range as well as a passing direction. With this configuration, it is possible to know the number of people who have moved across the areas sectioned by the sensing ranges of the corresponding sensors. Results obtained through the sensing are transmitted to the people count analysis unit 2.

The people count analysis unit 2 calculates the number of people who are currently present in each area based on information from the sensor group 1. For example, in FIG. 2, the number of people who are currently present in the area A may be calculated based on the number of people who have moved between the area B and the area A, and the number of people who have moved between the area C and the area A. The areas B and C are sectioned by the sensing ranges of the corresponding sensors, and are adjacent to the area A. Such processing is performed for all the areas A to G to obtain the number of people, which is then transmitted to the display control unit 3 periodically.

Based on the number of people in each area which is transmitted from the people count analysis unit 2, the display control unit 3 selects an appropriate content for each of the display devices 41, ... of the display device group 4, and then issues an instruction for display.

A people-count large/small determination section 31 of the display control unit 3 receives the number of people in each area which is transmitted from the people count analysis unit 2. The people-count large/small determination section 31 makes determinations as to which area is an area having a large number of people present (concentrated area) and which area is an area having a small number of people (sparse area). Criterion for the determinations may be set in a simple manner, such as an area having the largest number of people and an area having the smallest number of people. Alternatively, a threshold may be set so as to determine that an area having the number of people exceeding the threshold is the concentrated area and that an area having the number of people equal to or smaller than the threshold is the sparse area. Alternatively, the following method is conceivable. That is, a mean value and a standard deviation of the areas are calculated, and then an area having the number of people deviating from the mean value by the standard deviation or larger is determined as the concentrated area, whereas an area having the number of people deviating little therefrom is determined as the sparse area. Information on the area having a large number of people present and the area having a small number of people, which are determined by the people-count large/small determination section 31, is transferred to a display content selection section 32.

Based on the information transferred from the people-count large/small determination section 31, information on relation of adjacent areas, and the rules reflecting intentions of an information provider side, the display content selection section 32 determines which of the display devices 41, ... located in the areas A to G is to display a content of which area. In the case of the shopping center, it is determined which display device is to display an advertisement content of a shop of which area. The rules reflecting the intentions of the information provider side express how a distribution of people in a building is desirably to be controlled. Examples of the rules include "avoiding concentration" and "concentrating people to the concentrated area". In this case, an algorithm for selecting an area is written for each of the rules in the form that can be interpreted by the display content selection section 32.

For example, as illustrated in FIG. 4A, in the case of the rule of "avoiding concentration", the display content selection section 32 selects a content of an area adjacent to the concentrated area for the display devices 41, ... in the concentrated area. The display content selection section 32 selects a content of an adjacent area other than the concentrated area for the display devices 41,
... in the area adjacent to the concentrated area. The display content selection section 32 selects a content of the sparse area for the display devices 41, ... in the sparse area. The display content selection section 32 selects a content of an own area for the display devices 41, ... in the other areas.

To give description with reference to FIG. 2, in a case where the people-count large/small determination section 31 has determined that the area A is the concentrated area and that the area G is the sparse area, the display content selection section 32 selects, under the first condition, contents of the area B and the area C for the display devices 41, ... in the area A. The display content selection section 32 selects, under the second condition, a content of the area D for the display devices 41, ... in the area B, and selects contents of the area D and the area F for the display devices 41,
... in the area C. The display content selection section 32 selects, under the third condition, a content of the area G for the display devices 41, ... in the area G. The display content selection section 32 selects, under the fourth condition, contents of the area D, the area E, and the area F for the display devices 41, ... in the area D, the area E, and the area F, respectively.

On the other hand, as illustrated in FIG. 4B, to give description of the case of the rule of "concentrating people to the concentrated area" also with reference to FIG. 2, the display content selection section 32 selects, under the first condition, a content of the area A for the display devices 41, ... in the area A. The display content selection section 32 selects, under the second condition, the contents of the area B and the area C for the display devices 41, ... in the area G. The display content selection section 32 selects, under the third condition, the contents of the area B and the area C for the display devices 41, ... in the area E and the area F. The display content selection section 32 selects, under the fourth condition, the content of the area A for the display devices 41,
... in the area B, the area C, and the area D.

Depending on results of the people-count large/small determination section 31, for example, there occurs a case in which one identical area corresponds to an area adj acent to the concentrated area, and the sparse area. However, such an overlap is avoided by applying the rules in order of description thereof in the rule application algorithm.

The rules are not limited to the rules exemplified in FIGS. 4A and 4B. The rules may include "concentrating people to the sparse area", "concentrating people to a particular area", "maintaining the current state", "causing people to walk around", and the like.

A content selection section 33 receives the results of the display content selection section 32, determines contents to be actually displayed, and issues instructions to the respective display devices 41, .... Because a shopping center or the like has a large number of shops, a plurality of shops belong to one area. In order to deal with this, there is prepared a correspondence table between areas and advertisement contents of shops belonging to the corresponding areas. The contents of the shops (advertising clients) associated with the area are delivered to the respective display devices 41, ... sequentially or randomly.

It should be noted that the sensors 11, ... may be any sensor as long as the sensor is capable of sensing a human. An infrared sensor, an ultrasonic sensor, a camera, or the like may be used.

Further, one area does not necessarily have only one of the display devices 41, .... There is a case in which a plurality of display devices 41, ... are located in one area. In such a case, the plurality of display devices 41, ... in the same area may display the same contents or may separately display the contents randomly as long as the contents belong to the area selected by the display content selection section 32.

As has been described above, pieces of information (contents) are dynamically selected based on the distribution of people currently present in the building and the rules reflecting the intentions of the information provider side, and are then displayed. Therefore, it is possible to realize optimal information provision by the display device group 4 as a whole. In addition, if a person who has seen information thus provided moves toward the displayed shop or the guided direction, the distribution of people in the building may be hopefully changed into a state that meets the intentions of the information provider side.

### Second embodiment

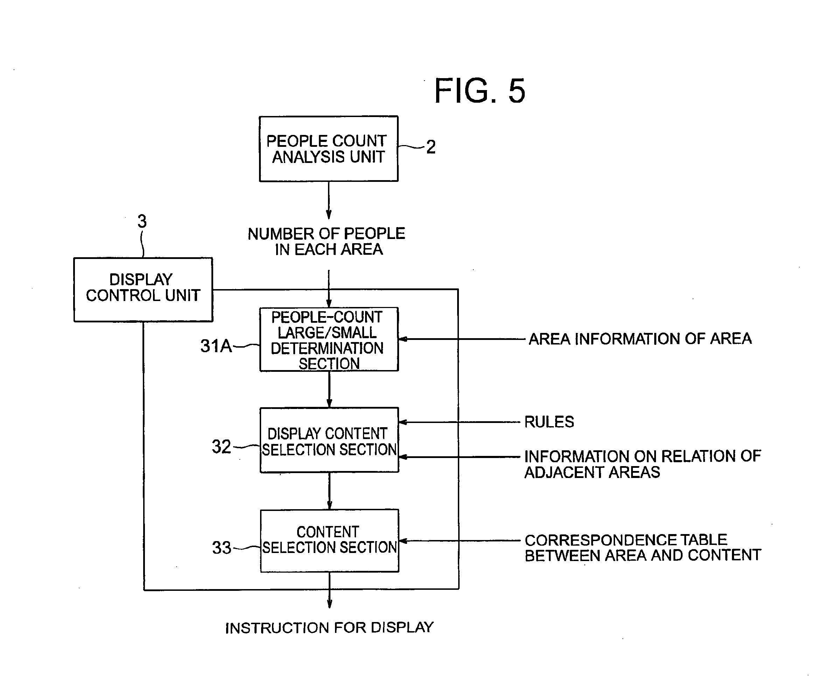

Description is given of an area information control system according to a second embodiment of the present invention with reference to FIG. 5. FIG. 5 is a flow chart illustrating operation of a display control unit of the area information control system according to the second embodiment of the present invention. It should be noted that a configuration of the area information control system according to the second embodiment of the present invention is similar as in the first embodiment described above.

In the first embodiment described above, assuming that the areas of the respective areas are substantially the same, the number of people in each area, which is an output from the people count analysis unit 2, is processed without any alteration. However, the second embodiment is applied to a case in which there is a large difference in area among the areas.

Based on the number of people in each area which is transmitted from the people count analysis unit 2, the display control unit 3 selects an appropriate content for each of the display devices 41, ... of the display device group 4, and then transmits an instruction for display. At this time, the number of people in each area which is transmitted from the people count analysis unit 2 is received by a people-count large/small determination section 31A of the display control unit 3. However, the number of people is not treated without any alteration. Area information of each area is separately input, and then the number of people per unit area, that is, a population density is calculated.

Hereinbelow, in the same manner as in the first embodiment described above, the people-count large/small determination section 31A makes determinations as to which area is an area having a large number of people present per unit area (concentrated area) and which area is an area having a small number of people per unit area (sparse area).

As described above, determinations are made as to which area is an area in which people are concentrated and which area is a sparse area by using a value (population density) obtained by taking the area of the area into account. Accordingly, even in a case where there is a large difference in area among the areas because of the places where the display devices 41, ... and the sensors 11, ... are located, it is possible to accurately recognize how people are currently distributed in the building, which therefore enables realizing optimal information provision by the display device group 4 as a whole.

### Third embodiment

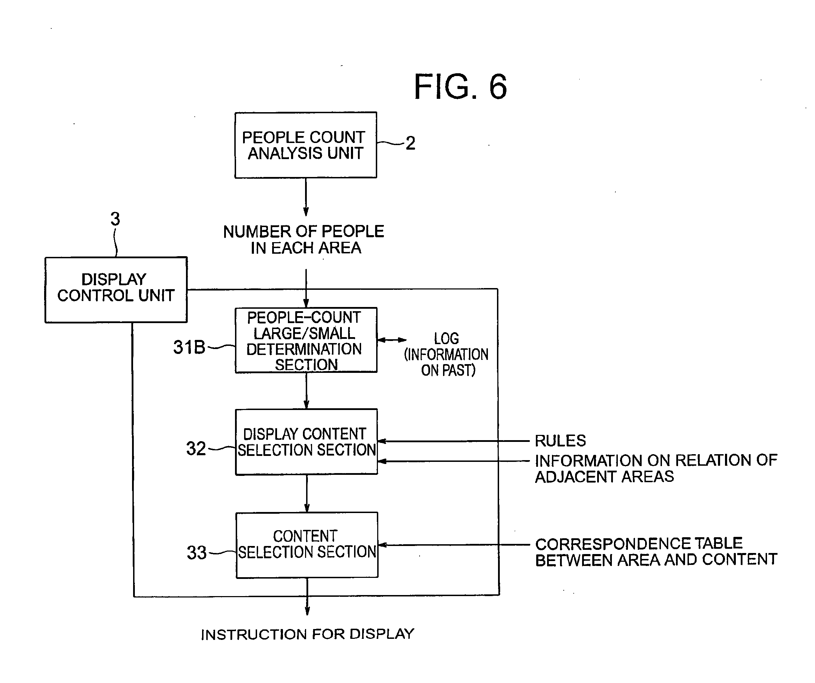

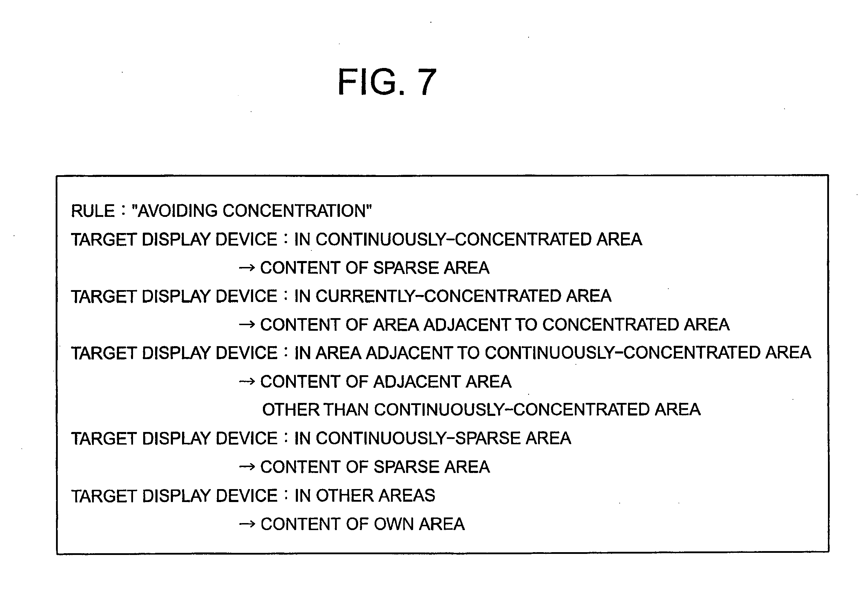

Description is given of an area information control system according to a third embodiment of the present invention with reference to FIGS. 6 and 7. FIG. 6 is a flow chart illustrating operation of a display control unit of the area information control system according to the third embodiment of the present invention. Further, FIG. 7 is a diagram illustrating a rule used by the display control unit of the area information control system according to the third embodiment of the present invention. It should be noted that a configuration of the area information control system according to the third embodiment of the present invention is similar as in the first embodiment described above.

The first embodiment described above is based on the distribution of people who are currently present in the building, but the third embodiment employs a status indicating how the number of people has changed thus far.

Based on the number of people in each area which is transmitted from the people count analysis unit 2, the display control unit 3 selects an appropriate content for each of the display devices 41, ... of the display device group 4, and then transmits an instruction for display.

The number of people in each area which is transmitted from the people count analysis unit 2 is received by a people-count large/small determination section 31B of the display control unit 3. The people-count large/small determination section 31B makes determinations as to which area is an area having a large number of people present (concentrated area) and which area is an area having a small number of people (sparse area), and, at this time, outputs (stores) determination results to a log (in a memory). Here, there is introduced a state indicating "continuation". The people-count large/small determination section 31B inputs the log, and specifies, with regard to a given past period of time (given number of times the number of people in each area has been received from the people count analysis unit 2 in the past) , a case in which the number of people present is large and a case in which the number of people is small. Determinations as to whether the number of people present is large or small with regard to the given past period of time are made by setting a threshold to specify a case in which the number of people is large m times or more out of the past n times and a case in which the number of people is small m times or more out of the past n times. Pieces of information on an area having a large number of people present for the given past period of time and an area having a small number of people for the given past period of time, which are determined by the people-count large/small determination section 31B, are transferred to the display content selection section 32.

Based on those pieces of information, information on relation of adjacent areas, and the rules reflecting intentions of the information provider side, the display content selection section 32 determines which of the display devices 41, ... located in the areas A to G is to display a content of which area. The rules reflecting the intentions of the information provider side express how the distribution of people in the building is desirably to be controlled. An example of the rules is "avoiding concentration". In this case, an algorithm for selecting an area is written for each of the rules in the form that can be interpreted by the display content selection section 32.

For example, as illustrated in FIG. 7, in the case of the rule of "avoiding concentration", the display content selection section 32 selects a content of the sparse area for the display device in a continuously-concentrated area, in which people have been concentrated continuously from the past. The display content selection section 32 selects a content of an area adjacent to the concentrated area for the display device in a currently-concentrated area, in which people are currently concentrated. The display content selection section 32 selects a content of the adjacent area other than the continuously-concentrated area for the display device in an area adjacent to the continuously-concentrated area in which people have been concentrated continuously from the past. The display content selection section 32 selects a content of the sparse area for the display device in a continuously-sparse area, in which people have been sparse continuously from the past. The display content selection section 32 selects a content of an own area for the display device in the other areas.

To give description with reference to FIG. 2, in a case where the people-count large/small determination section 31B has determined that the area A is the continuously-concentrated area, that the area D is the currently-concentrated area, and that the area G is the continuously-sparse area, the display content selection section 32 selects, under the first condition, a content of the area G for the display devices 41, ... in the area A. The display content selection section 32 selects, under the second condition, contents of the area B, the area C, and the area E for the display devices 41, ... in the area D. The display content selection section 32 selects, under the third condition, a content of the area D for the display devices 41, ... in the area B, and contents of the area D and the area F for the display devices 41, ... in the area C. The display content selection section 32 selects, under the fourth condition, a content of the area G for the display devices 41, ... in the area G. The display content selection section 32 selects, under the fifth condition, contents of the area E and the area F for the display devices 41, ... in the area E and the area F, respectively.

As has been described above, by referring to the past state of the distribution of people in the building, the tendency thus far is also taken into account for the conditions in addition to a temporary distribution of people at a current time point in selecting contents. Therefore, it is possible to select contents more finely.

## Claims

1. An area information control system, comprising:
a plurality of sensors (1: 11, 12, 13) each for sensing comings and goings of people in an area obtained by sectioning an aisle of a building by a sensing range of a corresponding sensor;
a plurality of display devices (4: 41, 42, 43) located in each area, for respectively displaying predetermined contents;
a people count analysis unit (2) for calculating a number of people present in the each area based on the comings and goings of people sensed by the plurality of sensors (1); and
a display control unit (3) for selecting a content to be displayed for each of the plurality of display devices (4) based on the number of people present in the each area, which is calculated by the people count analysis unit (2), and a rule for selecting the predetermined contents to be displayed.

2. An area information control system according to claim 1, wherein the display control unit (3) comprises:
a people-count large/small determination section (31) for making determinations as to which area is a concentrated area in which the number of people present is large and which area is a sparse area in which the number of people present is small, based on the number of people present in the each area, which is calculated by the people count analysis unit (2);
a display content selection section (32) for determining which of the plurality of display devices (4) located in respective areas is to display a content of which area, based on information transferred from the people-count large/small determination section (31), information on relation of adjacent areas, and the rule reflecting an intention of an information provider side; and
a content selection section (33) for, based on a result of the determination made by the display content selection section (32) and a correspondence table between an area and a content of an advertising client belonging to the area, selecting the content of the advertising client associated with the area, and delivering the selected content to the each of the plurality of display devices (4).

3. An area information control system according to claim 1, wherein the display control unit (3) comprises:
a people-count large/small determination section (31A) for making determinations as to which area is a concentrated area having a large population density and which area is a sparse area having a small population density, based on the number of people present in the each area, which is calculated by the people count analysis unit (2), and area information of the each area;
a display content selection section (32) for determining which of the plurality of display devices (4) located in respective areas is to display a content of which area, based on information transferred from the people-count large/small determination section (31A), information on relation of adjacent areas, and the rule reflecting an intention of an information provider side; and
a content selection section (33) for, based on a result of the determination made by the display content selection section (32) and a correspondence table between an area and a content of an advertising client belonging to the area, selecting the content of the advertising client associated with the area, and delivering the selected content to the each of the plurality of display devices (4).

4. An area information control system according to claim 1, wherein the display control unit (3) comprises:
a people-count large/small determination section (31B) for making determinations as to which area is a continuously-concentrated area in which people have been concentrated continuously from a past, which area is a currently-concentrated area in which people are currently concentrated, and which area is a continuously-sparse area in which people have been sparse continuously from a past, based on the number of people present in the each area, which is calculated by the people count analysis unit (2), and a result of a people-count large/small determination for the each area with regard to a given past period of time;
a display content selection section (32) for determining which of the plurality of display devices (4) located in respective areas is to display a content of which area, based on information transferred from the people-count large/small determination section (31B), information on relation of adjacent areas, and the rule reflecting an intention of an information provider side; and
a content selection section (33) for, based on a result of the determination made by the display content selection section (32) and a correspondence table between an area and a content of an advertising client belonging to the area, selecting the content of the advertising client associated with the area, and delivering the selected content to the each of the plurality of display devices (4).
